(19) Europäisches Patentamt
European Patent Office
Office européen des brevets

(11) EP 2 525 065 B1

(12) EUROPEAN PATENT SPECIFICATION

(45) Date of publication and mention
of the grant of the patent:
28.11.2018 Bulletin 2018/48

(51) Int Cl.:
F02D 29/02 (2006.01)    F02D 41/06 (2006.01)
F02D 45/00 (2006.01)    F02N 15/00 (2006.01)
F02P 5/15 (2006.01)    F02N 11/08 (2006.01)

(21) Application number: 11732831.0

(22) Date of filing: 06.01.2011

(86) International application number:
PCT/JP2011/050084

(87) International publication number:
WO 2011/086961 (21.07.2011 Gazette 2011/29)

(54) **INTERNAL COMBUSTION ENGINE CONTROL DEVICE**

STEUERVORRICHTUNG FÜR EINEN VERBRENNUNGSMOTOR

DISPOSITIF DE COMMANDE POUR MOTEUR À COMBUSTION INTERNE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 13.01.2010 JP 2010005193

(43) Date of publication of application:
21.11.2012 Bulletin 2012/47

(73) Proprietor: TOYOTA JIDOSHA KABUSHIKI
KAISHA
Toyota-shi, Aichi-ken, 471-8571 (JP)

(72) Inventors:
• NAKAMURA, Yoshifumi
Toyota-shi
Aichi 471-8571 (JP)
• YOSHIHARA, Masatomo
Toyota-shi
Aichi 471-8571 (JP)

• UCHIDA, Akito
Toyota-shi
Aichi 471-8571 (JP)
• OKAMURA, Koji
Toyota-shi
Aichi 471-8571 (JP)
• MASUDA, Satoshi
Kariya-shi
Aichi 448-8661 (JP)

(74) Representative: D Young & Co LLP
120 Holborn
London EC1N 2DY (GB)

(56) References cited:
EP-A2- 1 288 491    WO-A2-2006/075726
JP-A- 58 162 738    JP-A- 2002 339 781
JP-A- 2003 065 191    JP-A- 2008 223 674
JP-A- 2008 267 297    JP-A- 2009 299 598
JP-A- 2010 112 354    US-A1- 2008 262 707
US-A1- 2009 157 284

## Description

TECHNICAL FIELD

The present invention relates to a control device for an internal combustion engine that stops the engine when automatic stop conditions are met and starts the engine when restart conditions are met.

BACKGROUND ART

For example, one type of control device for an internal combustion engine has been known that performs automatic stop and restart functions. Specifically, when certain conditions are met, the device automatically stops the operation of the internal combustion engine. The device restarts the engine when the conditions are no longer met, that is, when restart conditions are met. Patent Document 1 discloses this type of control device for an internal combustion engine that determines that automatic stop conditions are met, for example, when the traveling speed of the vehicle is lower than or equal to a predetermined speed and the driver is depressing the brake pedal. On determination that the automatic stop conditions are met, the control device for an internal combustion engine of Patent Document 1 stops fuel injection to automatically stop the engine. Thereafter, when detecting that the brake pedal is no longer depressed, the control device determines that restart conditions for the engine are met and activates the starter and restarts fuel injection to start the engine. At such restarting, the amount of fuel injection is increased, factoring in adhesion of some of the injected fuel on wall surfaces of the intake passage and the combustion chambers (wall surface adhesion).

A typical starter has a pinion gear and is configured such that, when not in operation, the pinion gear does not mesh with a ring gear attached to an engine output shaft, and that, only when in operation, the pinion gear and the ring gear mesh each other to transmit rotational force to the engine output shaft. On the other hand, many internal combustion engines that have the automatic start and restart functions described above employ a constant mesh starter as disclosed in Patent Document 2. The pinion gear of a constant mesh starter constantly meshes with a ring gear, so that, when starting the engine, rotational force is transmitted from the ring gear to the engine output shaft via a one-way clutch in an engaged state. Then, the engine is shifted to a state in which autonomous operation is possible. When the rotational speed of the engine output shaft exceeds the rotational speed of the ring gear, the one-way clutch is disengaged and the starter stops driving the ring gear. Thereafter, since the one-way clutch remains disengaged, the engine output shaft rotates with the ring gear stopped. When a constant mesh starter is employed as such a starter for an internal combustion engine, time required for starting the engine is shortened compared to a case in which a typical starter is used.

PRIOR ART DOCUMENT

Patent Document

Patent Document 1: Japanese Laid-Open Patent Publication No. 11-257122
Patent Document 2: Japanese Laid-Open Patent Publication No. 2007-239590

Patent document US2008/0262707 discloses an internal combustion engine with an automatic stop and restart function wherein a restart of the engine before it could complete a full stop may be realized by a joint control of a starter and a fuel injection.

SUMMARY OF THE INVENTION

Problems that the Invention is to Solve

In a case in which automatic stop and restart of an internal combustion engine is performed like the device disclosed in Patent Document 2, restart may be performed when the engine is in a transient state, that is, when the rotation of the engine output shaft has dropped to a speed at which the engine cannot return to autonomous operation without assist of the starter, but the engine has not completely stopped. At such restart, an increase of fuel injection amount is executed as in the above described case, in which the engine is started by the starter with the output shaft in a complete stopped state. In this case, however, a flow of intake air is present in the intake system and the combustion chambers of the internal combustion engine, and the flow of intake air increases the amount of injected fuel that is introduced into the combustion chambers. This reduces the amount of wall surface adhesion compared to that in a case where the engine output shaft is stopped completely. As a result, when the internal combustion engine in a transient state is restarted, the air-fuel mixture tends to be over-rich. This can deteriorate a property of the exhaust gas.

Accordingly, it is an objective of the present invention to provide a control device for an internal combustion engine that, when restarting an internal combustion engine in a transient state, inhibits deterioration of the property of exhaust gas.

To achieve the foregoing objective and in accordance with one aspect of the present invention, a control device for an internal combustion engine is provided. The engine includes an output shaft, a constant mesh starter, and a fuel injection valve. Te device stops operation of the engine when an automatic step condition is met, and restarts operation of the engine when a restart condition is met. When restarting the engine when the restart condition is met after the automatic stop condition is met, the control device rotates the output shaft using the starter and restarts fuel injection using the fuel injection valve if the engine is in a transient state, in which rotation of the output shaft has dropped to a speed at which the engine cannot be returned to autonomous operation but has not stopped completely. The control device includes a reduction correcting section, wherein if the engine is in the transient state when the restart condition is met. The reduction corrects section reduces a starting fuel injection amount for restarting the engine compared to a case in which rotation of the output shaft has stopped completely.

BRIEF DESCRIPTION OF THE DRAWINGS

Fig.1 is a schematic diagram showing an in-line four-cylinder internal combustion engine according to one embodiment of the present invention;
Fig. 2 is a flowchart showing a procedure of a restart process executed by the control device for an internal combustion engine;
Fig. 3 is a graph showing a relationship between the engine rotational speed and a first correction factor;
Fig. 4 is a graph showing a relationship between the intake pressure and a second correction factor;
Fig. 5 is a graph showing a relationship between the engine rotational speed and a first correction value;
Fig. 6 is a graph showing a relationship between the intake pressure and a second correction value; and
Fig. 7 is a timing chart showing one example of changes in fuel injection amount and the air-fuel ratio of air-fuel mixture when the engine in a transient state is restarted.

MODES FOR CARRYING OUT THE INVENTION

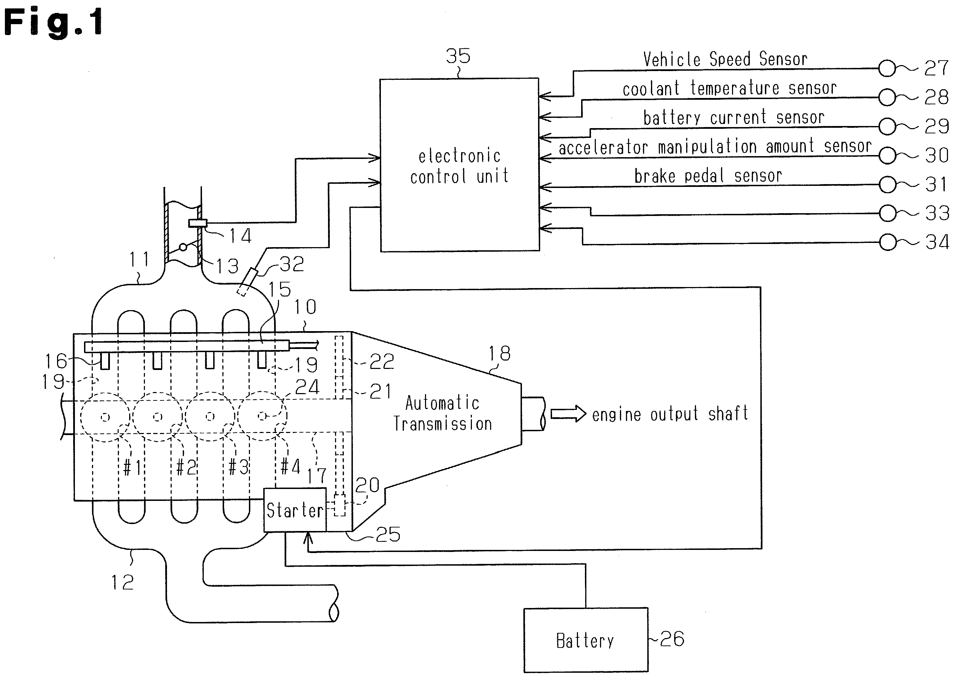

One embodiment of the present invention will now be described with reference to Figs. 1 to 7.
As shown in Fig. 1, an internal combustion engine 10 mounted on a vehicle has four cylinders #1, #2, #3, #4 arranged in line. An intake manifold 11 for supplying intake air to the cylinders #1 to #4 and an exhaust manifold 12 for discharging exhaust gas from the cylinders #1 to #4 are connected to the cylinders #1 to #4. The intake manifold 11 and the exhaust manifold 12 are each branched to correspond to each of the cylinders #1 to #4. The intake manifold 11 has a throttle valve 13 and an air flowmeter 14, which are located upstream of the branching portion. The throttle valve 13 regulates the amount of intake air, and the air flowmeter 14 measures the amount of intake air. A fuel injection valve 16 for injecting fuel in a delivery pipe 15 is connected to each of branches of the intake manifold 11. Each fuel injection valve 16 injects fuel to an intake port 19 of the corresponding one of the cylinders #1 to #4. An ignition plug 24 for igniting air-fuel mixture is provided in each of the cylinders #1 to #4.
The internal combustion engine 10 further includes a starter 25. In a state in which the internal combustion engine 10 is stopped, the starter 25 rotates an engine output shaft 17 by using electricity supplied by a battery 26 when the ignition switch is turned on. The starter 25 is a constant mesh starter. Specifically, the starter 25 includes a pinion gear 20, which constantly meshes with a ring gear 22 coupled to an engine output shaft 17 via a one-way clutch 21. When the internal combustion engine 10 is started, rotation force of the starter 25 is transmitted to the engine output shaft 17 via the one-way clutch 21. On the other hand, during operation of the engine 10, the one-way clutch 21 is disengaged so that rotation of the ring gear 22 is stopped with the starter 25 remaining meshed with the pinion gear 20.
As shown in Fig. 1, the internal combustion engine 10 and the vehicle having the engine 10 are equipped with various sensors for detecting the engine operation state and the vehicle traveling state. The sensors include the above described air flowmeter 14, a vehicle speed sensor 27, a coolant temperature sensor 28, a battery current sensor 29, an accelerator manipulation amount sensor 30, a brake pedal sensor 31, an intake pressure sensor 32, a rotational speed sensor 33, and a cam angle sensor 34. The intake pressure sensor 32 is located in the intake manifold 11 at a position downstream of the throttle valve 13. The rotational speed sensor 33 outputs a pulse signal each time the engine output shaft 17 rotates by a predetermined angle. The cam angle sensor 34 outputs a signal corresponding to the rotational phase of the camshaft (not shown), which rotates half a turn while engine output shaft 17 rotates one turn. Detection signals of the air flowmeter 14 and the sensors 27 to 34 are sent to an electronic control unit 35, which functions as a control device.
The electronic control unit 35 includes a computation process device (CPU), a program memory (ROM), a data memory (RAM), and executes various types of control such as control of the fuel injection valves 16 and the starter 25. The electronic control unit 35 computes the engine rotational speed NE based on output signals from a rotational speed sensor 33. The electronic control unit 35 acquires the crank angle CA based on output signals from the rotational speed sensor 33 and the cam angle sensor 34, thereby executing cylinder identification, and sets the fuel injection timing and the ignition timing for the cylinders #1 to #4. The engine rotational speed NE and the intake pressure PM are parameters that change to temporally coincide with and to be correlated with changes in the flow velocity of intake air. The flow velocity of intake air is increased as the engine rotational speed NE is increased or as the intake pressure PM is lowered.
The electronic control unit 35 also executes control related to "economy running", in which the internal combustion engine 10 is automatically stopped or restarted in accordance with the operation state of the vehicle having the engine 10 or operating manipulations applied to the vehicle.

The control related to the economy running will now be described. During operation of the engine 10, the electronic control unit 35 executes an automatic stop process when automatic stop conditions for the engine 10 are met, for example, when the vehicle comes to a stop at a stoplight.

The automatic stop conditions may include the following:

> the accelerator manipulation amount is zero (the accelerator pedal is not depressed);
> the vehicle speed is lower than or equal to a predetermined speed;
> the brake pedal is depressed;
> the engine coolant temperature is higher than or equal to a predetermined temperature; and
> the charge level of the battery 26 is higher than or equal to a predetermined level.

Particularly, in the present embodiment, the electronic control unit 35 determines that the automatic stop conditions for the engine 10 are met when all of the above listed conditions are met based on detection signals from the sensors 27 to 34. Various types of threshold values for determining whether the automatic stop conditions are met are obtained in advance, for example, through experimentation, and are stored in the program memory (ROM) in the electronic control unit 35.

When the automatic stop process is executed, fuel injection into the cylinders #1 to #4 by the fuel injection valves 16 and ignition by the ignition plugs 24 are stopped, so that the engine operation is stopped.

On the other hand, when the engine operation is at a stop, the engine 10 is started if conditions for restarting the engine 10 are met. The restart conditions may include the following:

> the brake pedal is not depressed;
> the manipulation amount of the accelerator pedal is not zero;
> the charge level of the battery 26 has dropped below the predetermined level.

In the present embodiment, the electronic control unit 35 determines that the restart conditions for the engine 10 are met when any of the above listed condition is met based on detection signals from the sensors 27 to 34.

When the restart conditions are met, the constant mesh starter 25 is activated to rotate the engine output shaft 17, so that the internal combustion engine 10 is restarted. Thereafter, when the engine 10 starts autonomous operation after being restarted by the starter 25, the starter 25 stops rotating. That is, the activation of the starter 25 is ended. As described above, the electronic control unit 35 automatically stops or restarts the engine operation in accordance with the operation state of the engine 10 or of the vehicle and operating manipulations applied to the vehicle, thereby reducing the fuel consumption of the engine 10.

In some cases, even after the automatic stop conditions are met and the automatic stop process is executed, the engine 10 is restarted before the engine 10 is stopped completely, that is, before a time sufficient for the rotation of the engine output shaft to be stopped completely. At this time, if the rotational speed of the internal combustion engine 10 is in a range in which the engine 10 can return to autonomous operation, that is, if autonomous operation can be resumed by starting fuel injection and ignition in accordance with the engine operation state without applying rotational force to the engine output shaft 17 by the starter 25, the engine 10 is put back to autonomous operation without activating the starter 25. If the rotation of the engine output shaft 17 has dropped to a level that does not allow the engine 10 to return to autonomous operation, it is determined that the engine 10 is in a transient state and a restart process is executed. Accordingly, the starter 25 is activated and the fuel injection amount for starting the engine 10 is controlled.

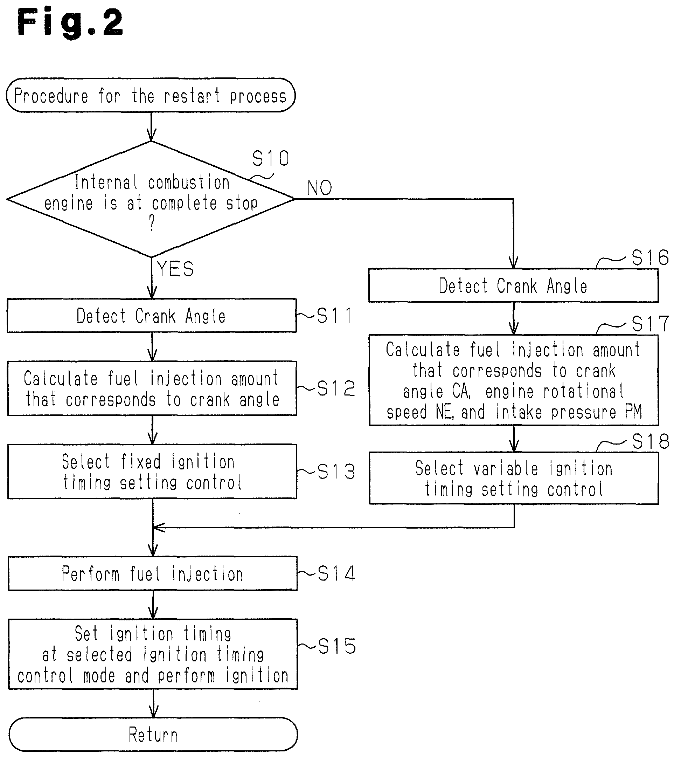

A procedure for the restart process executed by the electronic control unit 35 will now be described with reference to Fig. 2. The restart process is executed when the restart conditions are met and the engine rotational speed NE is lower than or equal to a predetermined value A.

First, at step S10, the electronic control unit 35 executes a process for determining whether the engine 10 is at a complete stop, that is, whether or not rotation of the engine output shaft 17 has stopped. If the electronic control unit 35 does not receive any signal from the rotational speed sensor 33 for a predetermined period, the electronic control unit 35 determines that the engine 10 is at a complete stop (YES at step S10). If the electronic control unit 35 receives signals from the rotational speed sensor 33 at predetermined intervals, the electronic control unit 35 determines that the engine 10 is in a transient state (NO at step S10). When determining that the engine output shaft 17 is at a complete stop, the electronic control unit 35 proceeds to step S11. At step S11, based on detection signals from the rotational speed sensor 33 and the cam angle sensor 34, the electronic control unit 35 memorizes the position in which the internal combustion engine 10 is at a stop, that is, the crank angle at which the engine output shaft 17 has stopped. Then, the electronic control unit 35 calculates a fuel injection amount Qs that corresponds to the crank angle CA (step S12). Specifically, a first map, in which the relationship between the crank angle CA and a basic injection amount Q for stating the engine 10 is defined, is referred to, and the most immediate crank angle at which fuel can be injected is determined based on the crank angle CA that has been memorized at step S11. The starting basic injection amount Q is calculated based on the most immediate crank angle. The electronic control unit 35 sets the calculated starting basic injection amount Q as the fuel injection amount Qs and proceeds to step S13. The electronic control unit 35 selects, as the ignition timing control mode, a fixed ignition timing setting control, in which a fixed ignition timing is set regardless of the operation state such as the engine rotational speed NE (step S13).

Next, at step S14, cylinder identification is executed to determine in which one of the cylinders #1 to #4 injection is performed first, and fuel injection is executed at a specific time. At step S14, the amount of fuel that has been calculated at step S12 is injected. At step S15, the fixed ignition timing setting control selected at step S13 is executed, so that ignition is executed at predetermined fixed ignition timing. To reduce vibration that accompanies start of the engine 10, the fixed ignition timing is defined to be retarded relative to the ignition timing at a steady operation. When the step S15 is finished, the restart process is temporarily suspended. When the restart process starts being executed, the starter 25 is activated at a predetermined time.

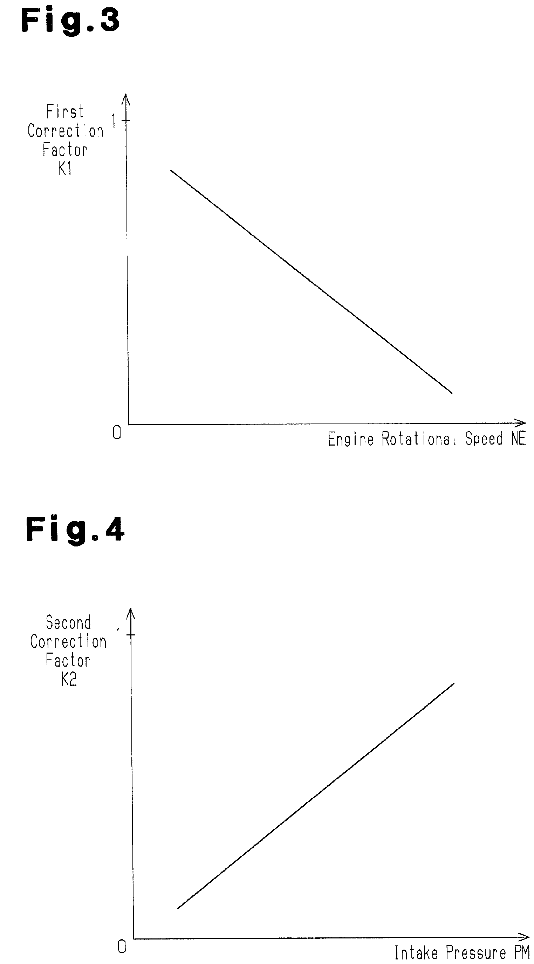

In contrast, if the engine output shaft 17 is rotating and the engine 10 is determined to be in a transient state at step S10, step S16 is executed in which the crank angle CA is detected. The process then advances to step S17, in which the most immediate crank angle at which fuel can be injected is determined based on the crank angle CA, and a fuel injection amount Qs that corresponds to the most immediate crank angle, the engine rotational speed NE, and the intake pressure PM is calculated. In this process, the first map is referred to in order to calculate the starting basic injection amount Q. The starting basic injection amount Q is determined taking into consideration the amount of fuel adhered to the wall surfaces of the intake manifold 11. Also, a second map shown in Fig. 3 is referred to in order to calculate a first correction factor K1, which corresponds to the engine rotational speed NE. Further, a third map shown in Fig. 4 is referred to in order to calculate a second correction factor K2, which corresponds to the intake pressure PM. The fuel injection amount Qs is calculated based on the following expression (1).

$$Qs = Q \cdot K1 \cdot K2 \qquad (1)$$

As shown in Fig. 3, the first correction factor K1 in the second map meets the condition of 0 < K1 < 1, and is defined to decrease as the engine rotational speed NE is increased. Specifically, the flow velocity of intake air is increased as the engine rotational speed NE is increased, and the wall surface adhesion amount is reduced so that the amount of fuel subjected to combustion is ensured. Thus, the first correction factor K1 is defined to decreases as the engine rotational speed NE is increased.

Also, as shown in Fig. 4, the second correction factor K2 in the third map meets the condition of 0 < K2 < 1, and is defined to decrease as the intake pressure PM is lowered. Specifically, the flow velocity of intake air is increased as the intake pressure PM is lowered, and the wall surface adhesion amount is reduced so that the amount of fuel subjected to combustion is ensured. Thus, the second correction factor K2 is defined to decreases as the intake pressure PM is lowered.

Accordingly, the fuel injection amount Qs calculated at step S17 is reduced as the engine rotational speed NE is increased and reduced as intake pressure PM is lowered. When the engine 10 is in a transient state, the process executed at step S17 corresponds to a process executed by a reduction correcting section of the electronic control unit 35.

Subsequently, at step S18, the electronic control unit 35 selects, as the ignition timing control mode, variable ignition timing setting control, in which the ignition timing is varied in accordance with the engine rotational speed NE and the intake pressure PM. Thereafter, the electronic control unit 35 proceeds to step S14 and executes cylinder identification based on the crank angle CA detected at step S16 to determine in which one of the cylinders #1 to #4 injection is performed first, and executes fuel injection to the identified one of the cylinders #1 to #4. At this time, the amount of fuel that has been calculated at step S17 is injected into the identified one of the cylinders #1 to #4.

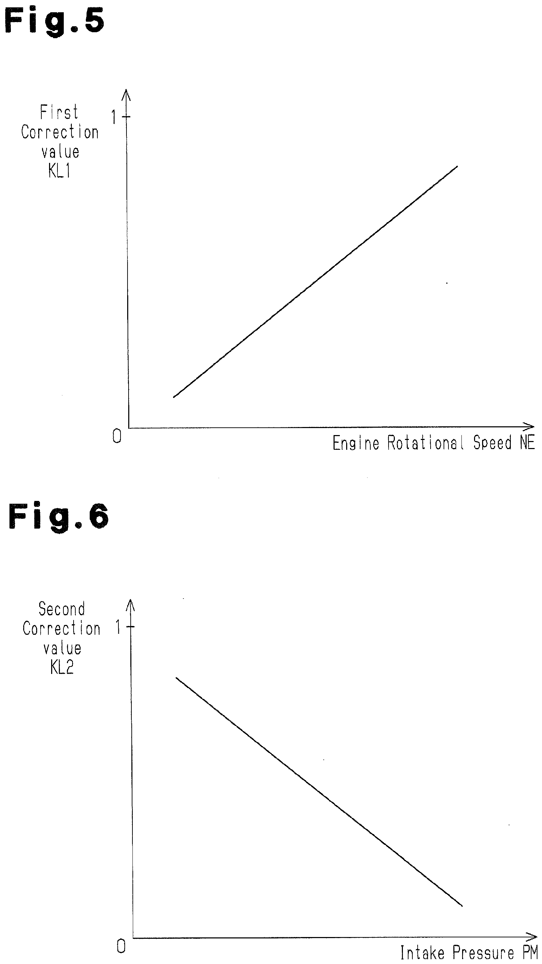

Next, at step S15, the variable ignition timing setting control is executed to determine starting ignition timing that corresponds to the engine rotational speed NE and the intake pressure PM. In the variable ignition timing setting control, the ignition timing is controlled to be at least advanced in relation to the fixed ignition timing. Specifically, a fourth map shown in Fig. 5 is referred to in order to calculate a first correction value KL1, which corresponds to the engine rotational speed NE, is calculated. Also, a fifth map shown in Fig. 6 is referred to in order to calculate a second correction value KL2, which corresponds to the intake pressure PM, is calculated. In the fourth map, the first correction value KL1 is defined to increase as the engine rotational speed NE is increased. In the fifth map, the second correction value KL2 is defined to increase as the intake pressure PM is lowered. This is because, if the ignition timing is not advanced as the engine rotational speed NE is increased or as the intake pressure PM is lowered, time at which air-fuel mixture is burned and flame propagation spreads in each of the cylinders #1 to #4 would come after the top dead center of a compression stroke.

When the variable ignition timing setting control is executed, the first correction value KL1 and the second correction value KL2 are subtracted from the calculated starting ignition timing, so that the starting ignition timing is advanced. According to the variable ignition timing setting control of the present embodiment, the correction amount by which the starting ignition timing is advanced is increased as the engine rotational speed NE is increased. Also, according to the variable ignition timing setting control, the correction amount by which the starting ignition timing is advanced is increased as the intake pressure PM is lowered. Thus, by executing the variable ignition timing setting control, the starting ignition timing can be set such that a great engine output is generated while avoiding knocking. When the internal combustion engine 10 is in a transient state, the process executed at step S15 corresponds to a process executed by an ignition timing correcting section of the electronic control unit 35.

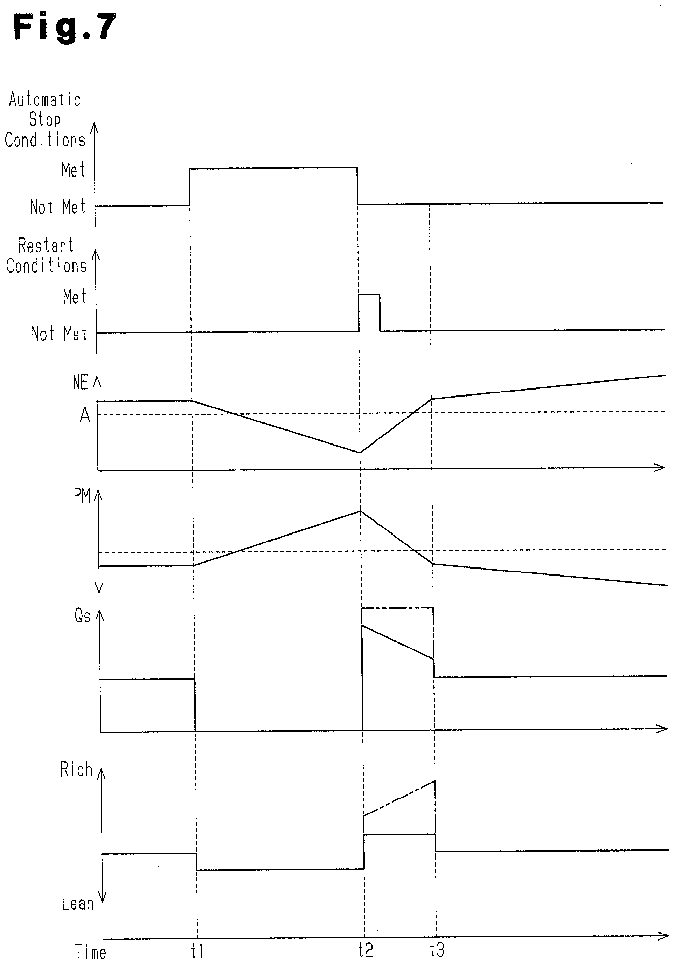

An example of operation in which the restart process is executed will now be described with reference to Fig. 7. Fig. 7 shows various engine operation states when the restart conditions are met and the restart is initiated during a transient state of the engine 10.

As shown in Fig. 7, when the automatic stop conditions are met at time t1 in a state in which the engine 10 is in autonomous operation, fuel injection is stopped. Then, after time t1, the engine rotational speed NE is lowered, and the intake pressure PM is increased. Thereafter, at time t2, the brake pedal is released so that the automatic stop conditions are no longer met, and the restart conditions are met. At this time, although the engine rotational speed NE has not dropped to zero, it is lower than the predetermined value A. Thus, only resuming of fuel injection cannot bring the internal combustion engine 10 back to autonomous operation. Therefore, when the restart conditions are met at time t2, the starter 25 is activated to assist rotation of the engine output shaft 17. During the period from time t2 to time t3, the engine rotational speed NE is increased and the intake pressure PM is lowered. Accordingly, the flow velocity of intake air (the amount of intake air through intake manifold 11 per unit cross-sectional area) is increased, and the fuel injection amount Qs is reduced correspondingly. Therefore, from time t2 to time t3, the fuel injection amount Qs indicated by a solid line in Fig. 7 is less than the fuel injection amount for normal operation indicated by a line formed by a long dash alternating with two short dashes in Fig. 7. If, from time t2 to time t3, the same amount of fuel is injected as a case in which the engine 10 is started from a stopped state, the air-fuel mixture in the cylinders #1 to #4 would be over-rich as indicated by a line formed by a long dash alternating with two short dashes in Fig. 7. However, in the present embodiment, since the starting basic injection amount Q is reduced based on the engine rotational speed NE and the intake pressure PM, which change to temporally coincide with and to be correlated with changes of the flow velocity of intake air, the calculated fuel injection amount Qs corresponds to the flow velocity of intake air downstream of the intake manifold 11. Therefore, even when the engine 10 in a transient state is started, the air-fuel ratio of the air-fuel mixture is close to the stoichiometric ratio as indicated by a solid line in Fig. 7.

At time t3, the starter 25 is stopped. However, since the engine rotational speed NE has exceeded the predetermined value A at this time, the engine 10 resumes autonomous operation after time t3.

The present embodiment provides the following advantages.

(1) When starting the engine 10 in a transient state using the starter 25, the electronic control unit 35 calculates the fuel injection amount Qs for starting based on the engine rotational speed NE and the intake pressure PM. At this time, the electronic control unit 35 reduces the starting basic injection amount Q as the engine rotational speed NE is increased or as the intake pressure PM is lowered. Therefore, even when the engine 10 is in a transient state when being started and air flow exists in the intake manifold 11 and the cylinders #1 to #4, the amount of fuel to be mixed with intake air is prevented from being excessive. The air-fuel mixture thus does not become over-rich. That is, when the engine 10 in a transient state is started, the property of exhaust gas is inhibited from being deteriorated.

The air flowmeter 14 is located in an upstream section of the intake manifold 11. Thus, when the flow velocity of intake air drawn in to the cylinders #1 to #4 is detected based on measurement results of the air flowmeter 14, the detection accuracy is degraded due to time taken by intake air for flowing from the air flowmeter 14 to the intake ports. Particularly, the lower the engine rotational speed NE, the longer becomes the time taken for intake air flow from the air flowmeter 14 to reach the intake ports. Thus, the detection accuracy of the flow velocity of intake air is significantly degraded when the engine 10 is in a transient state. In contrast, the electronic control unit 35 according to the present embodiment reduces the starting basic injection amount Q based on the engine rotational speed NE and the intake pressure PM, which change to temporally coincide with and to be correlated with changes of the flow velocity of intake air. Therefore, in the present embodiment, even when the internal combustion engine 10 in a transient state is started, the fuel injection amount Qs is reduced to more accurately correspond to the flow velocity of intake air than in a case in which the fuel injection amount is reduced by detecting the flow velocity of intake air based on the measurement result of the air flowmeter 14.

(2) The most immediate crank angle at which fuel can be injected is determined based on the crank angle CA when there is a demand for restarting the engine 10, and the starting basic fuel injection amount Q is calculated based on the most immediate crank angle. Therefore, the fuel injection amount Qs is set to an adequate value for starting the engine, so that the fuel economy is improved.

(3) The ignition timing is advanced when the engine 10 is in a transient state, the restart conditions are met, and the starter 25 performs starting. At this time, the higher the engine rotational speed NE or the lower the intake pressure PM, the greater becomes the amount by which the starting ignition timing is advanced. Therefore, compared to a case in which the ignition timing is delayed when the engine is restarted as in an engine start in a normal state, the engine output is prevented from being lowered and the original acceleration performance is maintained. In other words, an adequate engine output that corresponds to the engine rotational speed NE and the intake pressure PM is generated.

(4) The electronic control unit 35 injects fuel into the intake ports 19 at the start of the engine 10 using the fuel injection valves 16. When fuel is injected into the intake ports 19, some of the fuel collects on the wall surface of the intake manifold 11 before being drawn into the cylinders #1 to #4. Thus, the amount of wall surface adhesion tends to be greater than a case in which fuel is directly injected into the cylinders #1 to #4. Therefore, the fluctuation range of the amount of wall surface adhesion, which changes in accordance with the flow velocity of intake air, is greater than in a case in which fuel is directly injected into the cylinders #1 to #4, and the air-fuel mixture is more likely to become over-rich. However, the present embodiment reliably prevents the air-fuel mixture from becoming over-rich.

The above described embodiment may be modified as follows as necessary.

In the above illustrated embodiment, starting basic injection amount Q is reduced based on both of the intake pressure PM and the engine rotational speed NE. However, for example, the fuel injection amount may be reduced based on one of the intake pressure PM and the engine rotational speed NE. That is, the starting basic injection amount Q may be reduced using a correction value based on the engine rotational speed NE without taking into consideration the intake pressure PM. Alternatively, the starting basic injection amount Q may be reduced using a correction value based on the intake pressure PM without taking into consideration the engine rotational speed NE. Even when a fuel injection amount is calculated after such reduction, the property of exhaust gas is inhibited from being deteriorated when the engine 10 in a transient state is started.

When the starting basic injection amount Q is calculated, the starting basic injection amount Q does not need to be changed in accordance with the crank angle CA. For example, the starting basic injection amount Q may be a fixed value.

When the engine 10 is restarted from a state in which the engine output shaft 17 has stopped completely by activating the starter 25, the fuel injection amount Qs calculated at that time may be a fixed value. That is, instead of calculating the starting basic injection amount Q that corresponds to the crank angle CA, a fixed value may be used as the starting basic injection amount Q.

In the variable ignition timing setting control, the starting ignition timing is advanced based on both of the engine rotational speed NE and the intake pressure PM. However, for example, the starting ignition timing may be advanced based on either one of the engine rotational speed NE and the intake pressure PM. That is, the starting ignition timing may be advanced using a correction value based on the engine rotational speed NE without taking into consideration the intake pressure PM. Alternatively, the starting ignition timing may be advanced using a correction value based on the intake pressure PM without taking into consideration the engine rotational speed NE. Even if the starting ignition timing is advanced in these manners, the engine output is prevented from being lowered when the engine 10 in a transient state is started.

Alternatively, the starting ignition timing may be corrected by using a fixed advancement correction amount, without taking into consideration the engine rotational speed NE or the intake pressure PM.

In the illustrated embodiment, the present invention is applied to the engine 10, in which fuel is injected to the ports 19 when the engine 10 is started. However, the present invention may be applied to an engine in which in-cylinder injection is performed when the engine is started.

The automatic stop and restart conditions for the engine 10 are not limited to those listed in the illustrated embodiment. For example, when a starting operation with the car key is performed, it may be determined that the restart conditions are met and the restart may be executed.

DESCRIPTION OF THE REFERENCE NUMERALS

10... Internal Combustion Engine, 16...Fuel Injection Valves, 17... Engine Output Shaft, 25... Starter, 32... Intake Pressure Sensor, 33... Rotational Speed Sensor, 35... Electronic Control Unit serving as Control Device

**Claims**

1. A control device for an internal combustion engine (10), the engine including an output shaft (17), a constant mesh starter (25), and a fuel injection valve (16), wherein the device stops operation of the engine when an automatic stop condition is met, and restarts operation of the engine when a restart condition is met, wherein
when restarting the engine when the restart condition is met after the automatic stop condition is met, the control device rotates the output shaft using the starter and restarts fuel injection using the fuel injection valve if the engine is in a transient state, in which rotation of the output shaft has dropped to a speed at which the engine cannot be returned to autonomous operation but has not stopped completely, the control device comprises a reduction correcting section, wherein if the engine is in the transient state when the restart condition is met, the reduction correcting section reduces a starting fuel injection amount for restarting the engine compared to a case in which rotation of the output shaft has stopped completely, and

the reduction correcting section defines the reduction amount of the starting fuel injection amount such that the higher the flow velocity of intake air into the engine, the greater the reduction amount becomes.

2. The control device for an internal combustion engine according to claim 1, wherein the reduction correcting section defines the reduction amount of the starting fuel injection amount such that the higher the rotational speed of the output shaft when the restart condition is met, the greater the reduction amount becomes.

3. The control device for an internal combustion engine according to claim 1 or 2, wherein the reduction correcting section defines the reduction amount of the starting fuel injection amount such that the lower the intake pressure when the restart condition is met, the greater the reduction amount becomes.

4. The control device for an internal combustion engine according to any one of claims 1 to 3, further comprising an ignition timing correcting section, wherein if the engine is in the transient state when the restart condition is met, the ignition timing correcting section advances the starting ignition timing for restarting the engine compared to a case in which the operation of the engine has stopped completely.

5. The control device for an internal combustion engine according to claim 4, wherein the ignition timing correcting section defines the correction amount of the starting ignition timing such that the higher the engine rotational speed when the restart condition is met, the greater the correction amount becomes.

6. The control device for an internal combustion engine according to claim 4 or 5, wherein the ignition timing correcting section defines the correction amount of the starting ignition timing such that the lower the intake pressure when the restart condition is met, the greater the correction amount becomes.

7. The control device for an internal combustion engine according to any one of claims 1 to 6, wherein the fuel injection valve is arranged to inject fuel to an intake passage of the engine.

**Patentansprüche**

1. Steuervorrichtung für einen Verbrennungsmotor (10), wobei der Motor eine Ausgangswelle (17), einen Starter (25) im Dauereingriff und ein Kraftstoffeinspritzventil (16) umfasst, wobei die Vorrichtung den Betrieb des Motors abstellt, wenn eine Bedingung für das automatische Abstellen erfüllt ist, und den Betrieb des Motors neu startet, wenn eine Neustartbedingung erfüllt ist, wobei

die Steuervorrichtung beim Neustarten des Motors, wenn die Neustartbedingung erfüllt ist, nachdem die Bedingung für das automatische Abstellen erfüllt ist, die Ausgangswelle unter Verwendung des Starters dreht und die Kraftstoffeinspritzung unter Verwendung des Kraftstoffeinspritzventils neu startet, wenn sich der Motor in einem Übergangszustand befindet, in dem die Drehung der Ausgangswelle auf eine Drehzahl abgefallen ist, bei der der Motor nicht in den autonomen Betrieb zurückgeführt werden kann, aber nicht komplett abgeschaltet ist,

die Steuervorrichtung einen Reduzierungskorrekturbereich umfasst, wobei der Reduzierungskorrekturbereich, wenn sich der Motor in dem Übergangszustand befindet, wenn die Neustartbedingung erfüllt ist, ein Startkraftstoffeinspritzungsausmaß zum Neustarten des Motors im Vergleich zu einem Fall, in dem die Drehung der Ausgangswelle komplett aufgehört hat, reduziert und

der Reduzierungskorrekturbereich das Reduzierungsausmaß des Startkraftstoffeinspritzungsausmaßes derart definiert, dass das Reduzierungsausmaß mit zunehmender Strömungsgeschwindigkeit der Einlassluft in den Motor größer wird.

2. Steuervorrichtung für einen Verbrennungsmotor nach Anspruch 1, wobei der Reduzierungskorrekturbereich das Reduzierungsausmaß des Startkraftstoffeinspritzungsausmaßes derart definiert, dass das Reduzierungsausmaß mit zunehmender Drehzahl der Ausgangswelle, wenn die Neustartbedingung erfüllt ist, größer wird.

3. Steuervorrichtung für einen Verbrennungsmotor nach Anspruch 1 oder 2, wobei der Reduzierungskorrekturbereich das Reduzierungsausmaß des Startkraftstoffeinspritzungsausmaßes derart definiert, dass das Reduzierungsausmaß mit abnehmendem Einlassdruck, wenn die Neustartbedingung erfüllt ist, größer wird.

4. Steuervorrichtung für einen Verbrennungsmotor nach einem der Ansprüche 1-3, die ferner einen Zündzeitpunktkorrekturbereich umfasst, wobei der Zündzeitpunktkorrekturbereich, wenn sich der Motor in dem Übergangszustand befindet, wenn die Neustartbedingung erfüllt ist, den Startzündzeitpunkt zum Neustarten des Motors im Vergleich zu einem Fall, in dem der Betrieb des Motors komplett abgeschaltet ist, nach früh verstellt.

5. Steuervorrichtung für einen Verbrennungsmotor nach Anspruch 4, wobei der Zündzeitpunktkorrekturbereich das Korrekturausmaß des Startzündzeitpunkts derart definiert, dass das Korrekturausmaß mit zunehmender Drehzahl, wenn die Neustartbedingung erfüllt ist, größer wird.

6. Steuervorrichtung für einen Verbrennungsmotor nach Anspruch 4 oder 5, wobei der Zündzeitpunktkorrekturbereich das Korrekturausmaß des Startzündzeitpunkts derart definiert, dass das Korrekturausmaß mit abnehmendem Einlassdruck, wenn die Neustartbedingung erfüllt ist, größer wird.

7. Steuervorrichtung für einen Verbrennungsmotor nach einem der Ansprüche 1-6, wobei das Kraftstoffeinspritzventil dahingehend angeordnet ist, Kraftstoff in einen Einlasskanal des Motors einzuspritzen.

## Revendications

1. Dispositif de commande pour un moteur à combustion interne (10), le moteur comprenant un arbre de sortie (17), un démarreur en prise constante (25), et une valve d'injection de carburant (16), le dispositif mettant le moteur à l'arrêt lorsqu'une condition d'arrêt automatique est remplie, et remettant le moteur en marche lorsqu'une condition de remise en marche est remplie, dans lequel

   lors de la remise en marche du moteur lorsque la condition de remise en marche est remplie après que la condition d'arrêt automatique a été remplie, le dispositif de commande met l'arbre de sortie en rotation au moyen du démarreur et reprend l'injection de carburant au moyen de la valve d'injection de carburant si le moteur se trouve dans un état transitoire, dans lequel la rotation de l'arbre de sortie a ralenti jusqu'à une vitesse à laquelle le moteur ne peut pas être remis en fonctionnement autonome mais ne s'est pas complètement arrêté,
   le dispositif de commande comprend une section de correction par réduction, la section de correction par réduction réduisant, si le moteur se trouve dans un état transitoire lorsque la condition de remise en marche est remplie, une quantité d'injection de carburant de mise en marche pour la remise en marche du moteur par comparaison avec un cas dans lequel la rotation de l'arbre de sortie a complètement cessé, et la section de correction par réduction définissant la quantité de réduction de la quantité d'injection de carburant de mise en marche de telle sorte que plus la vitesse d'écoulement de l'air d'admission dans le moteur est élevée, plus la quantité de réduction est élevée.

2. Dispositif de commande pour un moteur à combustion interne selon la revendication 1, dans lequel la section de correction par réduction définit la quantité de réduction de la quantité d'injection de carburant de mise en marche de telle sorte que plus la vitesse de rotation de l'arbre de sortie est élevée lorsque la condition de remise en marche est remplie, plus la quantité de réduction est élevée.

3. Dispositif de commande pour un moteur à combustion interne selon la revendication 1 ou 2, dans lequel la section de correction par réduction définit la quantité de réduction de la quantité d'injection de carburant de mise en marche de telle sorte que plus la pression d'admission est basse lorsque la condition de remise en marche est remplie, plus la quantité de réduction est élevée.

4. Dispositif de commande pour un moteur à combustion interne selon l'une quelconque des revendications 1 à 3, comprenant en outre une section de correction de calage de l'allumage, dans lequel, si le moteur se trouve dans un état transitoire lorsque la condition de remise en marche est remplie, la section de correction de calage de l'allumage avance le calage de l'allumage de mise en marche pour la remise en marche du moteur par comparaison à un cas dans lequel le moteur a cessé complètement de fonctionner.

5. Dispositif de commande pour un moteur à combustion interne selon la revendication 4, dans lequel la section de correction de calage de l'allumage définit la quantité de correction du calage de l'allumage de mise en marche de telle sorte que plus la vitesse de rotation du moteur est élevée lorsque la condition de remise en marche est remplie, plus la quantité de correction est élevée.

6. Dispositif de commande pour un moteur à combustion interne selon la revendication 4 ou 5, dans lequel la section de correction de calage de l'allumage définit la quantité de correction du calage de l'allumage de mise en marche de telle sorte que plus la pression d'admission est basse lorsque la condition de remise en marche est remplie, plus la quantité de correction est élevée.

7. Dispositif de commande pour un moteur à combustion interne selon l'une quelconque des revendications 1 à 6, dans lequel la valve d'injection de carburant est conçue pour injecter du carburant dans un passage d'admission du moteur.

**Fig.1**

Vehicle Speed Sensor 27
coolant temperature sensor 28
battery current sensor 29
accelerator manipulation amount sensor 30
brake pedal sensor 31
33
34

electronic control unit 35

engine output shaft

Automatic Transmission 18

Battery 26

Starter

22 21 20 25
19 24 17
#4 #3 #2 #1
10 15 13 14
11 12
16 19
32

# Fig.2

```
     ( Procedure for the restart process )
                        │
                        ▼                          S10
              ╱──────────────────╲
            ╱   Internal combustion  ╲      NO
          ╱    engine is at complete stop  ╲──────────────────────┐
            ╲          ?          ╱                                │
              ╲──────────────────╱                                 │
                        │ YES                                      ▼           ~S16
                        ▼                              ┌───────────────────────┐
              ┌──────────────────┐ ~S11               │   Detect Crank Angle   │
              │  Detect Crank Angle │                 └───────────────────────┘
              └──────────────────┘                                │          ~S17
                        │                              ┌───────────────────────┐
                        ▼                              │ Calculate fuel injection amount │
              ┌──────────────────┐                    │  that corresponds to crank  │
              │ Calculate fuel injection amount │ ~S12│   angle CA, engine rotational │
              │ that corresponds to crank angle │     │ speed NE, and intake pressure PM │
              └──────────────────┘                    └───────────────────────┘
                        │                                         │          ~S18
                        ▼                              ┌───────────────────────┐
              ┌──────────────────┐                    │   Select variable ignition │
              │   Select fixed ignition │ ~S13         │    timing setting control │
              │   timing setting control │            └───────────────────────┘
              └──────────────────┘                               │
                        │◄──────────────────────────────────────┘
                        ▼
              ┌──────────────────┐ ~S14
              │  Perform fuel injection │
              └──────────────────┘
                        │
                        ▼
              ┌──────────────────┐ ~S15
              │   Set ignition timing │
              │ at selected ignition timing │
              │ control mode and perform ignition │
              └──────────────────┘
                        │
                        ▼
                   ( Return )
```

# Fig.3

First Correction Factor K1 vs Engine Rotational Speed NE

# Fig.4

Second Correction Factor K2 vs Intake Pressure PM

# Fig.5

First Correction value KL1 — Engine Rotational Speed NE

# Fig.6

Second Correction value KL2 — Intake Pressure PM

# Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11257122 A
- JP 2007239590 A
- US 20080262707 A